Europäisches Patentamt

European Patent Office

Office européen des brevets

(19)

(11) Numéro de publication: **0 199 608**
**B1**

(12) **FASCICULE DE BREVET EUROPEEN**

(45) Date de publication du fascicule du brevet: **25.04.90**

(51) Int. Cl.⁵: **G 06 K 13/07,** G 07 B 1/00

(21) Numéro de dépôt: **86400355.3**

(22) Date de dépôt: **19.02.86**

(54) Dispositif de traitement de titres avec enregistrement magnétique à haute densité.

(30) Priorité: **18.04.85 FR 8505894**

(43) Date de publication de la demande:
**29.10.86 Bulletin 86/44**

(45) Mention de la délivrance du brevet:
**25.04.90 Bulletin 90/17**

(84) Etats contractants désignés:
**AT BE CH DE GB IT LI LU NL SE**

(56) Documents cités:
**FR-A-2 144 264**
**FR-A-2 357 011**
**FR-A-2 548 804**
**GB-A-2 090 454**
**US-A-3 043 589**

**IBM TECHNICAL DISCLOSURE BULLETIN, vol. 9,
no. 3, aou7t 1966, pages 292,293, New York, US;
R.W. KULTERMAN et al.: " Asynchronous
document handling system"
PATENTS ABSTRACTS OF JAPAN, vol. 8, no. 75
(P-266)1512r, 7 avril 1984 & JP - A - 58 219 604**

(73) Titulaire: **ELECTRONIQUE SERGE DASSAULT**
**5, avenue Ingres**
**F-75016 PARIS (FR)**

(72) Inventeur: **Pailler, Alain**
**64-B4, boulevard du Maréchal Joffre**
**F-92340 Bourg La Reine (FR)**

(74) Mandataire: **Plaçais, Jean-Yves et al**
**Cabinet Netter, 40, rue Vignon**
**F-75009 Paris (FR)**

Courier Press, Leamington Spa, England.

## Description

L'invention concerne les dispositifs de traitement de titres en papier, carton, ou analogue et s'applique en particulier à ceux dans lesquels on effectue une inscription sur une piste magnétique.

Des dispositif propres à effectuer une inscription magnétique sur un titre ont été décrits par la Demanderesse dans le Brevet français no 75 37475, publié sous le no 2 334 501, ainsi que dans la Demande de Brevet français no 83 11444, publiée sous le no 2 548 804. D'autres particularités de dispositifs de traitement de titres ont été décrites dans FR—A—2 566 941, FR—A—2 566 704 et FR—A—2 566 705, publiés le 03.01.1986.

Certaines applications, dont la confection de billets d'avion, requièrent un enregistrement magnétique de densité élevée, à savoir environ 83 bits par centimètre (210 bits par pouce). La distance entre deux transitions de flux magnétique sur la piste s'abaisse alors à environ 60 micromètres.

Ceci pose un problème, car, pour permettre une bonne lecture ultérieure de la piste magnétique, la tolérance sur la position de chaque transition de flux magnétique doit être rendue la plus faible possible. Cette tolérance ne doit pas excéder ± 6 micromètres ou ± 8% pour la densité d'enregistrement précitée.

Il a déjà été proposé par la Demanderesse d'utiliser une courroie, entraînée par un moteur pas à pas, pour déplacer un titre ou billet dans un trajet interne que comporte le dispositif de traitement de ce titre ou billet (FR—A—2 548 804). Une seconde courroie, mue par friction sur la première, avec interposition du titre lorsque celui-ci est présent, entraîne ce titre de façon que sa piste magnétique défile au droit d'une tête magnétique d'enregistrement/lecture.

Il est important d'obtenir une vitesse linéaire de déplacement du titre qui soit à la fois élevée et constante, tant pour l'inscription ou codage des données à haute densité, que pour la lecture ou décodage de celles-ci. En effet, dans ce second cas, l'amplitude du signal détecté par la tête de décodage est alors plus importante, ce qui augmente le rapport signal sur bruit, donc la fiabilité du décodage.

La Demanderesse a observé que la solution connue, utilisant des moteurs pas à pas à quatre phases, ne permet pas d'opérer à une vitesse élevée, en obtenant la densité d'enregistrement désirée, avec la précision voulue quant à la position des transitions de flux magnétique sur la piste.

La Damanderesse s'est alors tournée vers la possibilité qu'offrent les moteurs pas à pas d'opérer en subdivision de leurs pas élémentaires. Là encore, il est apparu que cette solution ne donnait pas satisfaction, en particulier au niveau de la précision voulue sur la position des transitions de flux magnétique.

Pour obtenir la vitesse élevée, il est apparu nécessaire que le mécanisme d'entraînement possède un faible couple résistant, notamment les organes mécaniques du moteur, et que celui-ci soit commandé par régulation de courant à partir d'une tension élevée.

Il faut encore que le moteur pas à pas puisse subir, sans perte du synchronisme, les phases d'accélération initiale et de décélération finale qui vont encadrer, dans le temps, sa phase de vitesse nominale lors des opérations d'inscription ou de lecture magnétique; pour ce faire il est important d'avoir une inertie minimale du mécanisme.

La présente invention vient apporter une solution satisfaisante au problème exposé ci-dessus.

Le dispositif de traitement de titres selon l'invention comprend des moyens d'entraînement du titre, à l'aide d'au moins une courroie actionnée par un moteur pas à pas, ces moyens d'entraînement étant propres à faire défiler une piste magnétique du titre sur une tête magnétique reliée à des circuits de commande d'inscription, qui comprennent eux-mêmes une unité de transfert de données et un modulateur de données.

Selon une première caractéristique de l'invention, le moteur pas à pas possède au moins cinq phases, et la même horloge sert à la commande de ce moteur pas à pas, à la commande du transfert de données par ladite unité, et à la commande du modulateur de données pour l'établissement des transitions de commande appliquées à la tête magnétique.

Ceci permet de réaliser un enregistrement magnétique de haute densité, avec und grande précision sur les transitions de flux magnétique inscrites sur la piste.

Selon un autre aspect de l'invention, la liaison mécanique du moteur pas à pas à la courroie est établie de sorte que celle-ci possède une vitesse linéaire nominale d'au moins 0,5 mètre par seconde.

Pour sa part, la fréquence d'horloge est d'au moins 10 kHz.

Plus particulièrement, le moteur pas à pas possède au moins 500 pas par tour, et il entraîne la courroie crantée par un pignon monté sur son arbre et de diamètre égal ou inférieur à 1 centimètre environ.

Selon un autre aspect de l'invention, le modulateur opère un codage en double fréquence à partir du signal d'horloge de base qui lui est appliqué.

Selon encore un autre aspect de l'invention, le moteur pas à pas est mis en vitesse au moyen d'une courbe d'accélération/décélération générée par logiciel et la génération des commandes de phases est assurée à l'aide d'une mémoire morte programmée avec la séquence adéquate.

D'autres caractéristiques et avantages de l'invention apparaîtront à l'examen de la description d'étaillée ci-après, et des dessins annexés, sur lesquels:

la figure 1 est une vue latérale de la partie mécanique d'un dispositif selon l'invention,

la figure 2 est un schéma de principe de la partie électronique d'un dispositif selon l'invention, pour l'inscription magnétique;

la figure 3 est un schéma de la partie électronique du dispositif selon l'invention, pour la lecture magnétique,

la figure 4 est le schéma électrique de principe du système de commande de rotation de phases du moteur pas à pas, et

les figures 5 et 6 sont des graphes relatifs à certains aspects du dispositif selon l'invention.

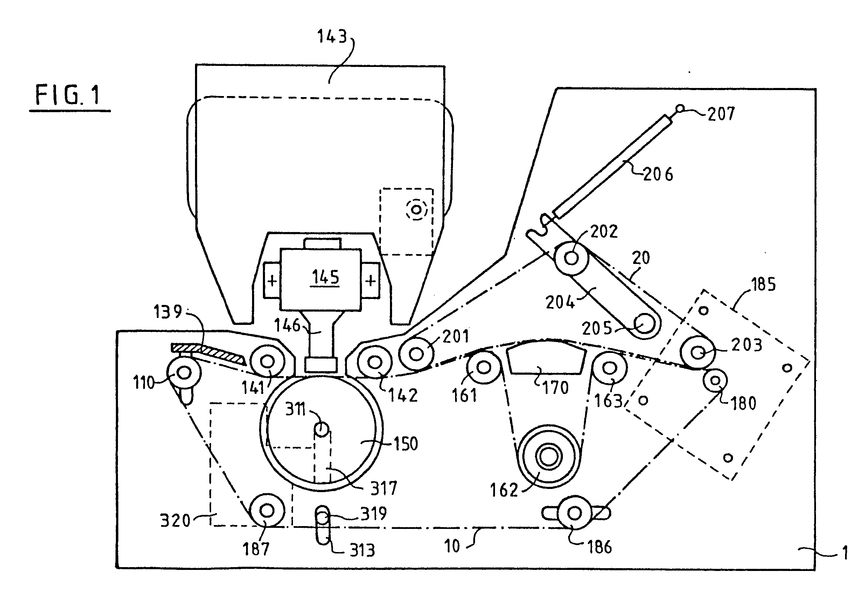

Il est d'abord fait référence à la figure 1.

La structure générale du dispositif illustré est semblable à celle décrite dans FR—A—2 548 804 déjà citée. Il comporte le perfectionnement décrit dans FR—A—2 566 705. Dans la mesure du possible, les références numériques utilisées dans les dessins de ces deux Demandes de Brevet antérieures ont été conservées.

Une courroie crantée 10 s'enroule en circuit fermé sur des galets 110, 141, 142, 161, 162, 163, 180, 186 et 187. Le galet 180, cranté est monté sur l'arbre d'un moteur pas à pas 185. La tension de la courroie 10 est réglable, par exemple par d'eplacement du galet 186.

Le titre ou billet d'avion à traiter est introduit au niveau du galet 110, où il s'engage par exemple entre la courroie qui tourne sur le galet 110 et un flasque 139. Différentes variantes relatives à l'introduction du titre seront trouvées dans les Brevets et Demandes de Brevets précités.

A partir du galet 110, un trajet interne est défini pour le billet d'avion, trajet interne qui va jusqu'au galet 180.

L'ensemble du dispositif est monté sur une plaque porteuse référencée 1, et dont la partie supérieure gauche est éclatée, pour clarifier la représentation.

Entre les galets 141 et 142, le titre passe au niveau d'un poste d'impression. Celui-ci est constitué d'une tête d'impression à aiguilles 145, dont le canal d'aiguille est illustré en 146. A ce poste est associé un dévidoir de ruban 143.

La courroie passe en affleurement sur un rouleau cylindrique 150, formant enclume d'impression. L'alésage central de ce rouleau 150 reçoit une tige 311 qui sert de premier guidage pour le déplacement en translation de la tête d'impression 145, 146 et du dévidoir 143, transversalement au plan de la figure 1. Un second guidage est fourni par une autre tige 319, qui passe à travers un évidement 313 de la plaque porteuse 1, et coopère avec deux galets (non représentés) enserrant cette tige 319. Agencée en crémaillère, la tige 311 engrène sur un pignon 317 solidaire d'un autre moteur pas à pas 320. D'autres détails sur ce montage pourront être trouvés dans FR—A—2 566 705 déjà citée.

La courroie 10 entraîne le billet d'avion par friction au droit de sa piste magnétique.

Le billet d'avion va, après le poste d'impression, passer au niveau d'un poste d'enregistrement/lecture magnétique, essentiellement constitué d'une tête 170. Les galets 161, 162 et 163 réalisent un effacement de la courroie 10 derrière la tête magnétique.

Une seconde courroie 20 s'enroule en circuit fermé sur un galet 201, placé en amont du galet 161, un galet 203, placé en aval du galet 163, et un galet 202 monté sur un bras 204 fixé en 205 sur la plaque porteuse 1, et sollicité à son autre extrémité par le rappel élastique que définit un ressort 206 prenant appui en 207 sur la même plaque porteuse.

La courroie 20 est entraînée soit par friction directe sur la courroie 10, dans les parties où elles sont tangentes l'une à l'autre, soit par friction avec interposition du billet, lorsque celui-ci est présent.

La Demanderesse a observé que, sous réserve que les courroies s'incurvent sur chaque galet d'un angle voisin de 165°, on obtient un entraînement très régulier du billet, sans aucun glissement relativement aux courroies, ni aucun glissement des courroies l'une par rapport à l'autre. C'est alors le moteur pas à pas 185 qui définit l'avance du billet.

Les dispositifs de ce gentre mis en oeuvre jusqu'à présent, qui utilisent un moteur pas à pas 185 à quatre phases, ont donné satisfaction, pour différentes applications, dont celle des billets du Chemin de Fer Métropolitain parisien, par exemple.

En revanche, une difficulté est apparaue lorsqu'il s'agit d'obtenir des densités d'enregistrement élevées, d'environ 83 bits par centimètre, comme cela est requis pour les billets d'avion, d'autant plus que la tolérance quant à la position des transitions de flux magnétique sur la piste du billet d'avion ne doit pas dépasser ± 8% ou ± 6 micromètres.

Comme cela a été rappelé plus haut, la Demanderesse a essayé différentes solutions, qui n'ont pas donné satisfaction, et notamment celle consistant à subdiviser le pas élémentaire d'un moteur pas à pas à quatre phases.

De façon inattendue, il est apparu qu'un moteur pas à pas à cinq phases, tel que celui disponible auprès de la Société allemande BERGER LAHR permet de satisfaire aux imperatifs précités, pourvu que l'on utilise la même horloge pour la commande de la rotation des phases du moteur, pour la commande du microprocesseur chargé de délivrer les données à inscrire sur la piste magnétique, et pour la commande du modulateur qui effectue la modulation préalable à une telle inscription.

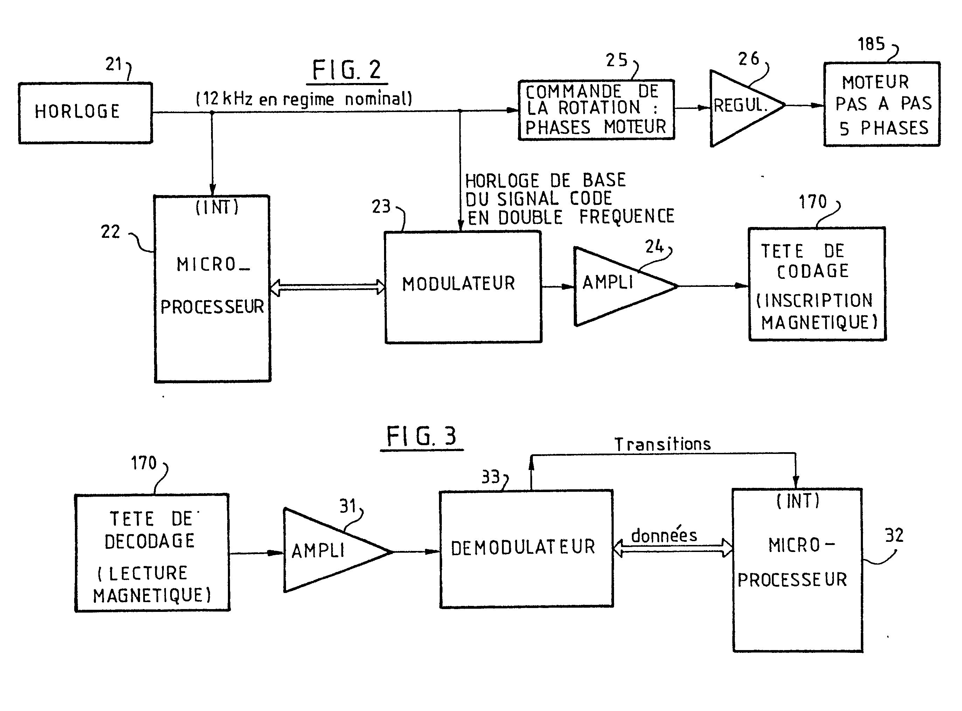

A cet égard, il est maintenant fait référence à la figure 2.

Une horloge 21 délivre un signal à une fréquence de 12 kHz.

Les fronts montants de l'horloge produisent des interruptions dans un microprocesseur 22 qui délivre à chaque fois une donnée à enregistrer au modulateur 23. Celui-ci reçoit également la fréquence d'horloge à 12 kHz, et réalise un codage en double fréquence de données que lui fournit le microprocesseur 22.

Selon ce codage, un 'O' logique est représenté par un signal de fréquence f, tandis qu'un '1' logique est représenté par un signal de fréquence 2 f.

La sortie du modulateur est appliquée à un amplificateur 24, qui alimente à son tour la tête magnétique 170.

La même horloge sert à la commande de la rotation des phases du moteur par des étages 25, suivis d'un régulateur de courant 26 qui alimente le moteur pas à pas à cinq phases 185.

Il est apparu que, en choisissant le diamètre du galet 180, compte tenu des 500 pas par tour que présente un moteur pas à pas à cinq phases du type précité, on peut obtenir une vitesse linéaire de défilement de la piste magnétique devant la tête magnétique qui s'élève à au moins 0,5 mètre/seconde, et est de préférence comprise entre 0,6 et 1 mètre/seconde. Ceci peut être obtenu par un pignon 180 de diamètre égale ou inférieur à 1 centimètre environ. Pour sa part, le pas du crantage de la courroie est inférieur à 5 millimètres, de préférence voisin de 2 millimètres.

Il est alors apparu que l'on obtient un synchronisme excellent entre l'envoi de la donnée à coder, du microprocesseur vers le modulateur, la modulation de cette même donnée par le modulateur 23, et le déplacement du billet sous l'effet du moteur pas à pas 185, d'où il résulte un positionnement très précis des transitions de flux sur la piste magnétique que comporte le billet d'avion.

Au décodage (figure 3), la tête de décodage 170 reçoit lesdites transitions, qui sont appliquées à un amplificateur 31, suivi du démodulateur 33, réalisant l'opération inverse de celle du modulateur 23. Les transitions repérées par le demodulateur 33 servent à la commande d'interruption dans le microprocesseur 32, qui recouvre ainsi les données qui étaient enregistrées sur la piste magnétique.

L'homme de l'art comprendra qu'il faut encore être capable d'accélérer le moteur pas à pas jusqu'à sa vitesse nominale, puis de le décélérer de cette vitesse nominale à la vitesse nulle, et ce en conservant le synchronisme. Cela est nécessaire aussi bien pour l'inscription/lecture magnétique que pour l'impression en clair sur le billet.

La variation de vitesse pour les phases d'accélération/décélération est obtenue par variation de l'horloge de base du dispositif de commande du moteur.

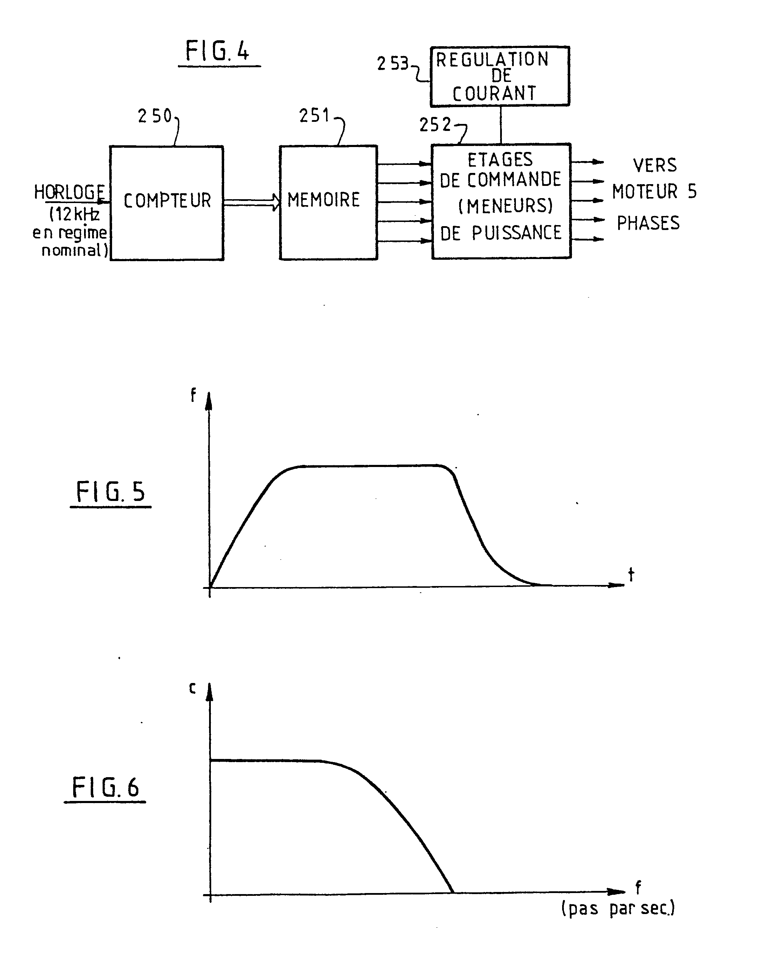

La figure 4 montre un mode de réalisation du dispositif de commande du moteur, en détaillant les modules 25 et 26 de la figure 2. La fréquence d'horloge (12 kHz) en régime nominal est appliquée à un compteur 250 qui excite une mémoire morte 251, programmée de façon à engendrer les commandes de phase selon la séquence adéquate. La sortie de la mémoire morte 251 actionne des étages de commande de puissance (ou "meneurs") 252, qui alimentent le moteur à cinq phases à partir d'une régulation de courant fournie par un étage 253.

La figure 5 résume l'allure désirée, d'après les travaux de la Demanderesse, pour la courbe d'accélération et de décélération d'un moteur pas à pas. Le temps est illustré en abscisse, et la fréquence des pas est illustrée en ordonnée. On voit que la fréquence doit d'abord monter, d'une manière proche de l'exponentielle, jusqu'à un palier, d'où elle redescend ensuite également de manière quasiexponentielle.

Selon un autre aspect de l'invention, et grâce à la faible inertie que présente le dispositif de l'invention, il est apparu que ceci est possible à partir d'un moteur pas à pas à cinq phases tel que ceux disponibles aujourd'hui. La figure 6 rappelle la courbe de couple d'un moteur pas à pas cinq phases en fonction de la fréquence f à laquelle avance celui-ci, exprimée en nombre de pas par seconde.

C'est à partir d'une telle courbe qu'il a été possible d'établir le graphe de la figure 5, puis de déterminer que le moteur pas à pas à cinq phases est susceptible de commander de manière convenable le dispositif selon l'invention, pour l'obtention de la densité d'enregistrement magnétique désirée, avec la tolérance imposée quant à la position des transitions de flux magnétique sur la piste.

L'invention offre aussi un autre avantage.

Les dispositifs connus, à moteur pas à pas 4 phases, engendrent un bruit qui est désagréable pour l'oreille par sa fréquence et son niveau.

Les dispositifs selon l'invention réduisent considérablement le désagrément:

par changement de fréquence, qui passe d'environ 1000 Hz à environ 10 000 Hz,

par diminution des chocs et à-coups mécaniques.

## Revendications

1. Dispositif de traitement de titres, comprenant des moyens d'entraînement du titre comportant au moins une courroie (10, 20) actionnée par un moteur pas à pas (185) et propres à faire défiler une piste magnétique du titre sur une tête magnétique (170) reliée à des circuits de commande d'inscription (22, 24) comprenant une unité de transfert de données (22) et un modulateur de données (23), caractérisé en ce que le moteur pas à pas (185) possède au moins cinq phases, et en ce que la même horloge (21) sert à la commande du moteur pas à pas (185), à la commande du transfert de données par ladite unité (22), et à la commande du modulateur de données (23) pour l'établissement des transitions de commande appliquées à la tête magnétique, ce qui permit de réaliser un enregistrement magnétique de haute densité, avec une grande précision sur les transitions de flux magnétiques inscrites sur la piste.

2. Dispositif selon la revendication 1, caractérisé en ce que la liaison mécanique (810) du moteur pas à pas à la courroie est établie de sorte que cele-ci possède une vitesse linéaire nominale d'au moins 0,5 mètre/seconde.

3. Dispositif selon la revendication 1, caractérisé en ce que la fréquence d'horloge (21) est d'au moins 10 kHz.

4. Dispositif selon l'une des revendications 1 à 3, caractérisé en ce que le moteur pas à pas (185) possède au moins 500 pas par tour, et en ce qu'il entraîne la courroie (10) crantée, par un pignon (180) monté sur son arbre, et de diamètre égal ou inférieur à 1 cm environ.

5. Dispositif selon l'une des revendications 1 à 4, caractérisé en ce que le modulateur (23) opère un codage en double fréquence à partir du signal signal d'horloge de base (21) qui lui est appliqué.

6. Dispositif selon l'une des revendications 1 à 5, caractérisé en ce que le moteur pas à pas (185) est commandé à travers un circuit d'accélération/ décélération programmées (250—253).

7. Dispositif selon l'une des revendications précédentes, caractérisé en ce que les moyens d'entraînement du titre comprennent une première courroie (10) s'enroulant en circuit fermé sur des galets (110, 141, 142, 161, 162, 163, 180, 186, 187), et qui coopère avec le titre sur une fraction de la largeur de celui-ci, sensiblement au droit de sa piste magnétique, cette première courroie s'effaçant (162) au niveau de la tête magnétique (170), alors que le titre se trouve sollicité vers la tête magnétique (170) par une seconde courroie (20) qui coopère par friction avec la première.

8. Dispositif selon l'une des revendications 1 à 7, caractérisé en ce que la courroie fait également défiler le titre au droit d'un poste d'impression en clair sur celui-ci (145, 146, 150).

9. Dispositif selon l'une des revendications précédentes, caractérisé en ce que le pas du crantage de la courroie (10) est inférieur à 5 mm.

**Patentansprüche**

1. Vorrichtung zur Bearbeitung von Belegen, mit Mitteln zum Antreiben des Belegs, die mindestens einen Treibriemen (10, 20) aufweisen, der von einem Schrittschaltmotor (185) angetrieben wird, und die einen Magnetstreifen des Belegs über einen Magnetkopf (170) laufen lassen, der mit Beschriftungs-Steuerkreisen (22, 24) verbunden ist, die eine Datenübertragungseinheit (22) und einen Datenmodulator (23) aufweisen, dadurch gekennzeichnet, daß der Schrittschaltmotor (185) mindestens fünf Phasen aufweist, und daß der gleiche Taktgeber (21) zur Steuerung des Schrittschaltmotors (185), zur Steuerung der Datenübertragung durch die Einheit (22), und zur Steuerung des Datenmodulators (23) zur erzeugung der an den Magnetkopf angelegten Steurübergänge dient, was es ermöglicht, eine Magnetaufnahme hoher Dichte zu erzeugen, mit einer großen Präzision der auf der Spur registrierten Magnetflußübergänge.

2. Vorrichtung nach Anspruch 1, dadurch gekennzeichnet, daß die mechanische Verbindung (810) des Schrittschaltmotors mit dem Treibriemen so hergestellt wird, daß dieser eine nominale Durchlaufgeschwindigkeit von mindestens 0,5 m/s aufweist.

3. Vorrichtung nach Anspruch 1, dadurch gekennzeichnet, daß die Taktfrequenz (21) mindestens 10 kHz beträgt.

4. Vorrichtung nach einem der Ansprüche 1 bis 3, dadurch gekennzeichnet, daß der Schrittschaltomotor (185) mindestens 500 Schritte pro Drehung aufweist, und daß er den formgezahnten Treibriemen (10) durch ein Ritzel (180) antreibt, das auf seiner Welle angeordnet ist und dessen Durchmesser gleich oder kleiner etwa 1 cm ist.

5. Vorrichtung nach einem der Ansprüche 1 bis 4, dadurch gekennzeichnet, daß der Modulator (23) eine Kodierung in doppelter Frequenz ausgehend von dem ihm zugeführten Basistaktsignal (21) durchführt.

6. Vorrichtung nach einem der Ansprüche 1 bis 5, dadurch gekennzeichnet, daß der Schrittschaltmotor (185) über einen programmierten Beschleunigungs/Verzögerungskreis (250—253) gesteuert wird.

7. Vorrichtung nach einem der vorhergehenden Anprüche, dadurch gekennzeichnet, daß die Antriebsmittel des Belegs einen ersten Treibriemen (10) aufweisen, der sich in geschlossenem Kreis auf Rollen (110, 141, 142, 161, 162, 163, 180, 186, 187) aufrollt, und der mit dem Beleg über einen Bruchteil von dessen Breite zusammenwirkt, im wesentlichen neben seinem Magnetstreifen, wobei dieser erste Treibriemen sich in Höhe des Magnetkopfes (170) entfernt (162), während der Beleg durch einen zweiten Treibriemen (20), der durch Reibung mit dem ersten zusammenwirkt, zum Magnetkopf (170) gezogen wird.

8. Vorrichtung nach einem der Ansprüche 1 bis 7, dadurch gekennzeichnet, daß der Treibriemen weiter den Beleg im rechten Winkel an einem Druckposten (145, 146, 150) für den lichten Druck auf dem Beleg vorbeilaufen läßt.

9. Vorrichtung nach einem der vorhergehenden Ansprüche, dadurch gekennzeichnet, daß der Schritt der Rastung des Treibriemens (10) kleiner als 5 mm ist.

**Claims**

1. A device for processing documents, comprising drive means for the document comprising at least one belt (10, 20) actuated by a step motor (185) and adapted to make a magnetic strip on the document pass over a magnetic head (170) connected to inscription command circuits (22, 24) comprising a data transfer unit (22) and a data modulator (23), characterised in that the step motor (185) has at least five phases, in that the same clock (21) commands the step motor (185), the transfer of data by said unit (22), and the data modulator (23) for establishing command transitions applied to the magnetic head, which makes it possible to realise a high density magnetic recording, with great precision on the transitions of magnetic flux inscribed on the strip.

2. A device according to claim 1, characterised in that the mechanical connection (810) of the step motor to the belt is so formed that the belt has a nominal linear speed of at least 0.5 metres/ second.

3. A device according to claim 1, characterised in that the clock frequency (21) is at least 10 kHz.

4. A device according to one of claims 1 to 3, characterised in that the step motor (185) has at least 500 steps per revolution, and in that it drives the notched belt (10) by a pinion (180) mounted on its shaft, and having a diameter equal to or less than approximately 1 cm.

5. A device according to one of claims 1 to 4, characterised in that the modulator (23) operates a double frequency coding from the basic clock (21) signal applied to it.

6. A device according to one of claims 1 to 5, characterised in that the step motor (185) is operated via a programmed acceleration/deceleration circuit (250—253).

7. A device according to one of the preceding claims, characterised in that the means of driving the document comprise a first belt (10) revolving in a closed circuit on rollers (110, 141, 142, 161, 162, 163, 180, 186, 187), and which co-operates with the document over a fraction of the width thereof, substantially to the right of its magnetic strip, this first belt disappearing (162) in the region of the magnetic head (170), while the document is drawn towards the magnetic head (170) via a second belt (20) which co-operates by friction with the first.

8. A device according to one of claims 1 to 7, characterised in that the belt also makes the document pass to the right of a station for printing thereon in clear.

9. A device according to one of the preceding claims, characterised in that the pitch of notching on the belt (10) is less than 5 mm.

FIG.1

EP 0 199 608 B1

## FIG. 2

21 HORLOGE

(12 kHz en regime nominal)

25 COMMANDE DE LA ROTATION : PHASES MOTEUR

26 REGUL.

185 MOTEUR PAS A PAS 5 PHASES

HORLOGE DE BASE DU SIGNAL CODE EN DOUBLE FREQUENCE

22 (INT) MICRO_PROCESSEUR

23 MODULATEUR

24 AMPLI

170 TETE DE CODAGE (INSCRIPTION MAGNETIQUE)

## FIG. 3

Transitions

170 TETE DE DECODAGE (LECTURE MAGNETIQUE)

31 AMPLI

33 DEMODULATEUR

données

32 (INT) MICRO-PROCESSEUR

EP 0 199 608 B1

## FIG. 4

253 ⌐ REGULATION DE COURANT

250 ⌐ COMPTEUR

HORLOGE (12 kHz en regime nominal)

251 ⌐ MEMOIRE

252 ⌐ ETAGES DE COMMANDE (MENEURS) DE PUISSANCE

VERS MOTEUR 5 PHASES

## FIG. 5

## FIG. 6

(pas par sec.)